# EUROPEAN PATENT APPLICATION

(11) **EP 4 527 763 A1**
(43) Date of publication of application: **26.03.2025**
(21) Application number: 24201275.5
(22) Date of filing: 19.09.2024
(51) Int. Cl.: B65G 15/12, B65G 21/08, B65G 23/22

(54) **CONVEYING DEVICE INCLUDING OUTER ROTOR MOTOR**

(30) Priority: 19.09.2023 KR 20230124988
(71) Applicant: Energium Co., Ltd., Siheung-si, Gyeonggi-do 15115 (KR)
(72) Inventor: LEE, Kang Hee, 15115 Siheung-si (KR); BAE, Yong Tak, 15115 Siheung-si (KR); PARK, Sang Jun, 15115 Siheung-si (KR)
(74) Representative: Tiburzi, Andrea

(57) **Abstract**

A conveying device according to an embodiment of the disclosure may include a motor of an outer rotor type, a conveyor unit that receives rotational force from the motor and moves a transfer target inserted into the conveying device in a length direction of the conveying device, and a support unit that extends in the length direction of the conveying device and in which the motor and the conveyor unit are mounted. The conveyor unit may include a connecting member that surrounds the motor and is in contact with the motor to receive the rotational force, and a conveyor belt that is disposed to wrap the connecting member and moves the transfer target.

## Description

### BACKGROUND

### Field

The disclosure relates to a conveying device including an outer rotor motor.

### Description of Related Art

Test tubes that contain samples (e.g., blood) required for various tests are used in medical institutions such as hospitals. In order to improve the efficiency of the test work, information on the sample contained in the test tube may be provided to the surface of the test tube. For example, the date of blood collection, the time of blood collection, and personal information of the test subject may be shown using a barcode, etc. on the surface of the test tube.

An automated test tube labeling system that attaches a label printed with text information or electronic information such as a barcode may be used to provide sample information to the surface of the test tube.

The test tube whose labeling has been completed by the labeling system or the test tube to be supplied to the labeling system can be conveyed through a conveying device. The test tube can be conveyed to a location where supply is required along a given direction through the conveying device.

The conveying device for conveying the test tube may include therein a motor and a separate gear device connected to the motor. In the case that the conveying device includes the gear device connected to the motor, additional costs and time may be required to manufacture the gear device.

In the case that the conveying device includes the separate gear device connected to the motor, the size of the conveying device may be increased to secure space in which the gear device is disposed.

### SUMMARY

A conveying device according to an embodiment of the disclosure may include a motor of an outer rotor type, a conveyor unit that receives rotational force from the motor and moves a transfer target inserted into the conveying device in a length direction of the conveying device, and a support unit that extends in the length direction of the conveying device and in which the motor and the conveyor unit are mounted. The conveyor unit may include a connecting member that surrounds the motor and is in contact with the motor to receive the rotational force, and a conveyor belt that is disposed to wrap the connecting member and moves the transfer target.

The conveying device according to the embodiment of the disclosure has a structure in which the outer rotor type motor is connected to the conveyor belt without a gear device, so that it is possible to provide the conveying device that does not require the cost of manufacturing a gear device.

In addition, the conveying device according to the embodiment of the disclosure does not require space for arranging a gear device, so that the size of the conveying device (e.g., width and height of the conveying device) may be reduced.

The conveying device according to the embodiment of the disclosure may provide improved driving force by having the outer rotor type motors arranged at both ends thereof.

### BRIEF DESCRIPTION OF THE DRAWINGS

In the drawings, the same or similar reference numerals may be used to indicate the same or similar elements.
FIG. 1 is a perspective view showing a conveying device according to an embodiment of the disclosure.
FIG. 2 is an exploded perspective view showing a conveying device according to an embodiment of the disclosure.
FIG. 3 is a perspective view showing a support unit according to an embodiment of the disclosure.
FIG. 4 is a perspective view showing a motor and a conveyor unit according to an embodiment of the disclosure.
FIG. 5 is a front view showing a conveying device according to an embodiment of the disclosure.
FIG. 6 is a side view showing a conveying device according to an embodiment of the disclosure.
FIG. 7 is a perspective view showing the conveyance of a transfer target in a conveying device according to an embodiment of the disclosure.
FIG. 8 is a schematic view showing the movement of a transfer target in a conveying device according to an embodiment of the disclosure.

### DETAILED DESCRIPTION

Embodiments of the disclosure and the terms used herein are not intended to limit the technical features of the disclosure to particular embodiments, but should be understood to encompass various modifications, equivalents, or alternatives of the embodiments.

In the drawings and description, similar reference numerals may be used to indicate similar or related elements. The singular form of a noun used to indicate a certain item means that one or more of the items may be included, unless the context clearly indicates otherwise.

The phrase "at least one of', when used with a list of items, means that different combinations of one or more of the listed items may be used. For example, "at least one of A, B, and C" includes any of the following combinations: A; B; C; A and B; A and C; B and C; and A, B and C. Additionally, the terms including ordinal expressions such as "first", "second", etc. are used for merely distinguishing one element from other elements and do not limit the corresponding elements in the sequence or importance of the elements.

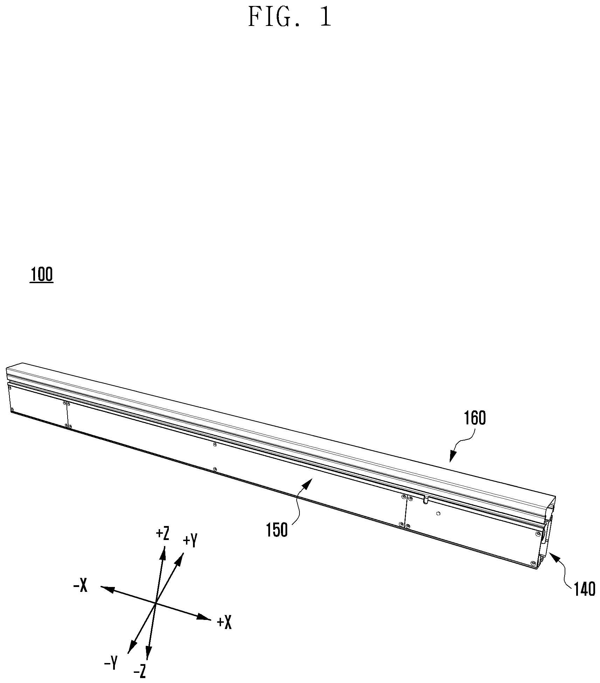

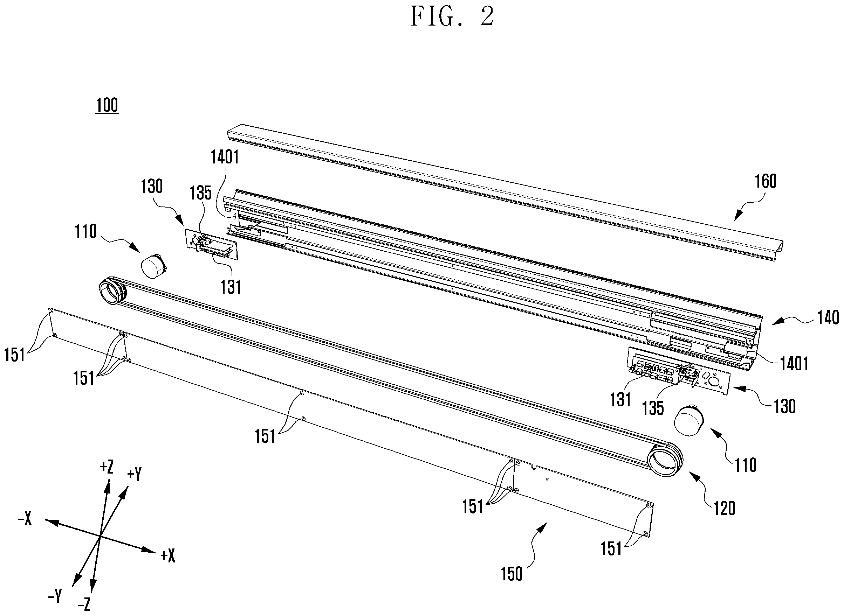

FIG. 1 is a perspective view showing a conveying device 100 according to an embodiment of the disclosure, and FIG. 2 is an exploded perspective view showing a conveying device 100 according to an embodiment of the disclosure.

In describing the conveying device 100 according to an embodiment of the disclosure, the length direction of the conveying device 100 may refer to the x-axis direction, and the width direction of the conveying device 100 may refer to the y-axis direction. Also, the height direction of the conveying device 100 may refer to the z-axis direction.

With reference to FIGS. 1 and 2, the conveying device 100 may include a motor 110, a conveyor unit 120, a substrate 130, a support unit 140, a lateral cover 150, and/or an upper cover 160.

In an embodiment, the motor 110 can generate a rotational force and transmit the rotational force to another component of the conveying device 100.

In an embodiment, the conveying device 100 may include two motors 110. One motor 110 may be disposed at one end of the conveying device 100, and the other motor 110 may be disposed at the other end of the conveying device 100.

In an embodiment, the one end of the conveying device 100 may refer to an end of the conveying device 100 in the positive x-axis direction, and the other end of the conveying device 100 may refer to an end of the conveying device 100 in the negative x-axis direction.

In an embodiment, the motor 110 may be disposed at the conveyor unit 120. The motor 110 may transmit a rotational force to the conveyor unit 120.

In an embodiment, the conveyor unit 120 may extend in the length direction (e.g., in the x-axis direction) of the conveying device 100. The conveyor unit 120 can move a transfer target placed on the conveying device 100 in the length direction of the conveying device 100.

In an embodiment, the substrate 130 may be electrically connected to the motor 110. In an embodiment, the substrate 130 may include a processor 131. In an embodiment, the processor 131 is capable of controlling the rotation of the motor 110.

In an embodiment, the processor 131 may control the rotation of the two motors 110 to be substantially the same.

In an embodiment, the substrate 130 may include a detection sensor 135. The detection sensor 135 is capable of detecting the transfer target that is moved in the conveying device 100.

In an embodiment, the support unit 140 may form a seating space 1401 in which the motor 110 and the conveyor unit 120 are mounted. The support unit 140 may extend along the length direction of the conveying device 100.

In an embodiment, the support unit 140 is capable of supporting the transfer target being moved in the conveying device 100.

In an embodiment, the support unit 140 may include, at least in part, a structure that guides the transfer target being moved in the conveying device 100. For example, an upper portion of the support unit 140 (e.g., an end portion of the support unit 140 in the positive z-axis direction) may support the transfer target being moved in the conveying device 100 at both sides (i.e., one side and the other side).

In an embodiment, the support unit 140 may have, at least in part, a space in which the substrate 130 is mounted. For example, the substrate 130 may be disposed in the seating space 1401 of the support unit 140.

In an embodiment, the lateral cover 150 may have a plate shape. For example, the plate shape of the lateral cover 150 may have a surface facing the width direction (e.g., the y-axis direction) of the conveying device 100.

In an embodiment, the lateral cover 150 may be disposed in the negative y-axis direction with respect to the motor 110 and the conveyor unit 120. The lateral cover 150 may cover the seating space 1401 formed in the support unit 140 in the negative y-axis direction.

In an embodiment, the lateral cover 150 may have at least one fastening hole 151. The lateral cover 150 may be fastened to the support unit 140 using a separate fastening member (not shown) in the fastening hole 151.

In an embodiment, an upper portion of the conveying device 100 may refer to an end of the conveying device 100 in the positive z-axis direction.

In an embodiment, the upper cover 160 may cover the upper portion of the conveying device 100. For example, the upper cover 160 may be disposed in the positive z-axis direction with respect to the support unit 140. The upper cover 160 may protect the transfer target being moved in the conveying device 100 from being impacted.

In an embodiment, the support unit 140 may be arranged to surround the motor 110, the conveyor unit 120, and the substrate 130 at least in part. The support unit 140 may protect the motor 110, the conveyor unit 120, and the substrate 130 from external impact.

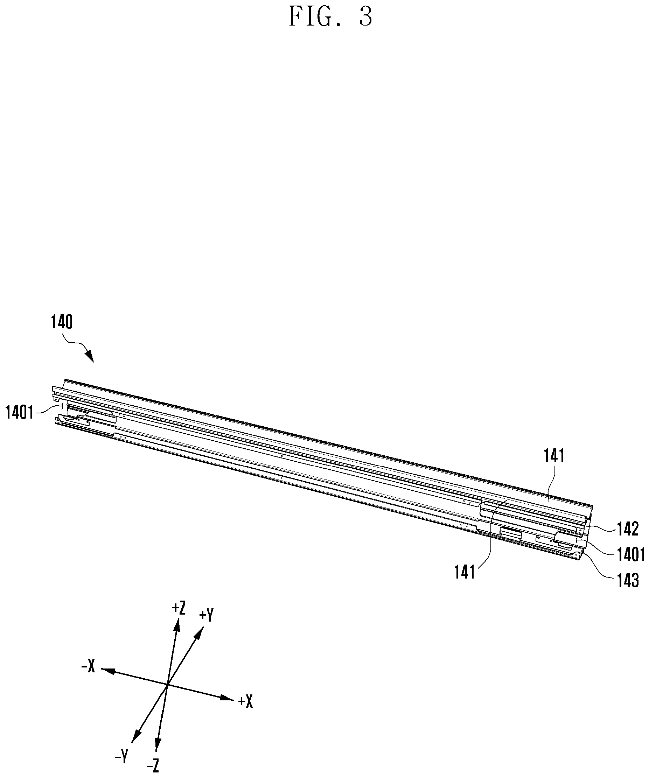

FIG. 3 is a perspective view showing a support unit 140 according to an embodiment of the disclosure.

In an embodiment, the support unit 140 may include a guide area 141, an installation area 142, a lower support area 143, and/or a seating space 1401.

In an embodiment, an upper end of the support unit 140 may refer to an end of the support unit 140 located in the positive z-axis direction. A lower end of the support unit 140 may refer to an end of the support unit 140 located in the negative z-axis direction.

In an embodiment, the guide area 141 may be an area located in the upper end of the support unit 140. The guide area 141 may support a transfer target, being moved in the conveying device 100, at one lateral side (e.g., in the positive y-axis direction) and the other lateral side (e.g., in the negative y-axis direction).

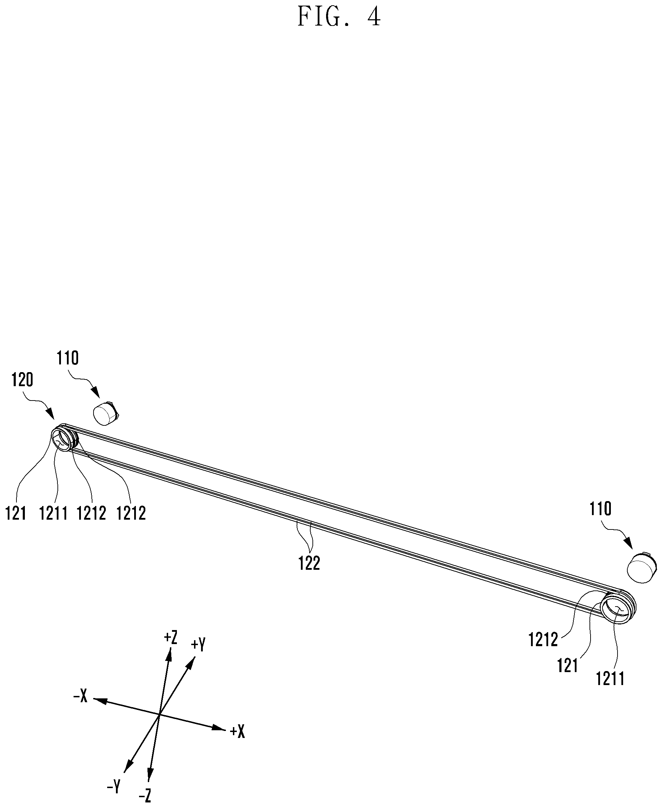

In an embodiment, the support unit 140 may include two guide areas 141. The two guide areas 141 may be formed in a shape symmetrical to each other with respect to a conveyor belt 122 (see FIG. 4).

In an embodiment, the two guide areas 141 may each have an inclined surface inclined toward the y-axis with respect to a plane perpendicular to the width direction (e.g., the y-axis direction) of the conveying device 100.

In an embodiment, a gap between the two guide areas 141 may increase as it goes in the height direction (e.g., in the positive z-axis direction) of the conveying device 100. For example, a distance in the y-axis direction between the two guide areas 141 may become greater as it goes in the positive z-axis direction.

In an embodiment, since the gap between the two guide areas 141 becomes greater in the height direction (e.g., in the positive z-axis direction) of the conveying device 100, it may be easy to insert the transfer target into the conveying device 100.

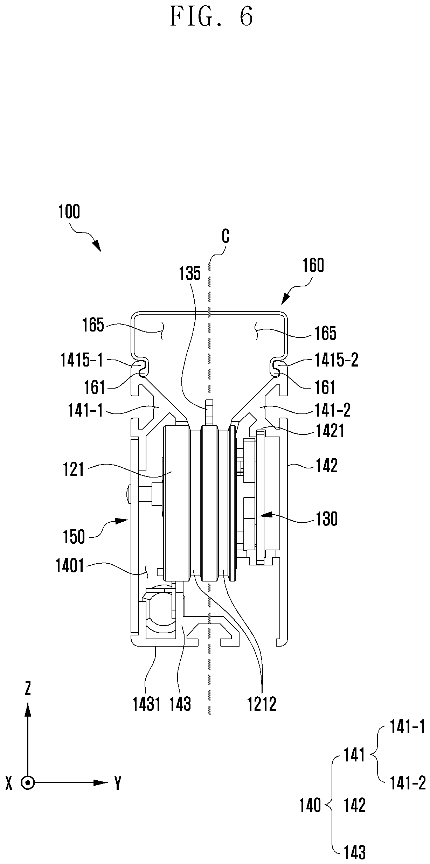

In an embodiment, the substrate 130 may be disposed in the installation area 142 of the support unit 140. In an embodiment, the installation area 142 may have a groove (e.g., a placement groove 1421, see FIG. 6) into which the substrate 130 may be inserted.

In an embodiment, the lower support area 143 may be an area located at the lower end of the support unit 140. In an embodiment, the lower support area 143 may be an area for supporting the conveying device 100. The lower support area 143 may include a structure extending in the width direction and the length direction of the conveying device 100 at least in part. The lower support area 143 may allow the conveying device 100 to maintain a fixed position without shaking on a plane parallel to the width and length directions of the conveying device 100.

In an embodiment, the guide area 141, the installation area 142, and the lower support area 143 may be formed integrally. For example, the guide area 141, the installation area 142, and the lower support area 143 may be connected to each other at least in part.

In an embodiment, the guide area 141, the installation area 142, and the lower support area 143 may be manufactured separately from each other and then assembled together. For example, the guide area 141, the installation area 142, and the lower support area 143 may be manufactured as separate individual components. After manufactured, the guide area 141, the installation area 142, and the lower support area 143 may be combined with each other.

FIG. 4 is a perspective view showing a motor 110 and a conveyor unit 120 according to an embodiment of the disclosure.

In an embodiment, the conveyor unit 120 may include a connecting member 121 and/or a conveyor belt 122.

In an embodiment, the conveyor belt 122 may be disposed to wrap at least a portion of the connecting member 121.

In an embodiment, the conveyor unit 120 may include two connecting members 121. One connecting member 121 may be disposed at one end of the conveyor belt 122, and the other connecting member 121 may be disposed at the other end of the conveyor belt 122.

In an embodiment, the connecting member 121 may be formed in a circular shape. The connecting member 121 may be extended in the form of a circular circumference, having therein a placement space 1211 in which the motor 110 can be mounted.

In an embodiment, the connecting member 121 may have a belt groove 1212. The belt groove 1212 may extend along the outer perimeter of the connecting member 121. The belt groove 1212 may be formed in a concave shape on at least a portion of the outer surface of the connecting member 121. In an embodiment, the conveyor belt 122 may be disposed in the belt groove 1212.

In an embodiment, the conveyor belt 122 may extend to externally wrap at least a portion of the connecting member 121 at one end and the other end.

In an embodiment, at least a portion of the conveyor belt 122 may extend along the length direction (e.g., the x-axis direction) of the conveying device 100.

In an embodiment, the conveyor unit 120 may include two conveyor belts 122. The two conveyor belts 122 may be formed in the same shape. The two conveyor belts 122 may be respectively placed in the belt grooves 1212 of the connecting member 121.

In an embodiment, an inner surface of the connecting member 121 may refer to a surface of the connecting member 121 that faces the placement space 1211. An outer surface of the connecting member 121 may refer to a surface facing the outside of the connecting member 121 and in which the belt grooves 1212 are formed.

In an embodiment, the motor 110 may be disposed in the placement space 1211 of the connecting member 121. In an embodiment, the inner surface of the connecting member 121 may be in contact with the outer surface of the motor 110.

In an embodiment, the outer surface of the connecting member 121 may be in contact with the conveyor belt 122.

In an embodiment, the connecting member 121 may transfer the rotational force of the motor 110 to the conveyor belt 122. Upon receiving the rotational force of the motor 110, the conveyor belt 122 may move at least partly in the length direction (e.g., in the x-axis direction) of the conveying device 100.

In an embodiment, the motor 110 may be an outer rotor type motor. For example, the motor 110 may be an outer rotor type motor in which a stator is positioned inside and a rotor is positioned outside the stator and rotates.

In an embodiment, since the motor 110 is an outer rotor type motor, a separate gear device may not be disposed between the connecting member 121 and the motor 110. Since there is no separate gear device between the connecting member 121 and the motor 110, the configuration of the conveying device 100 is simplified and the manufacturing cost of the conveying device 100 can be reduced.

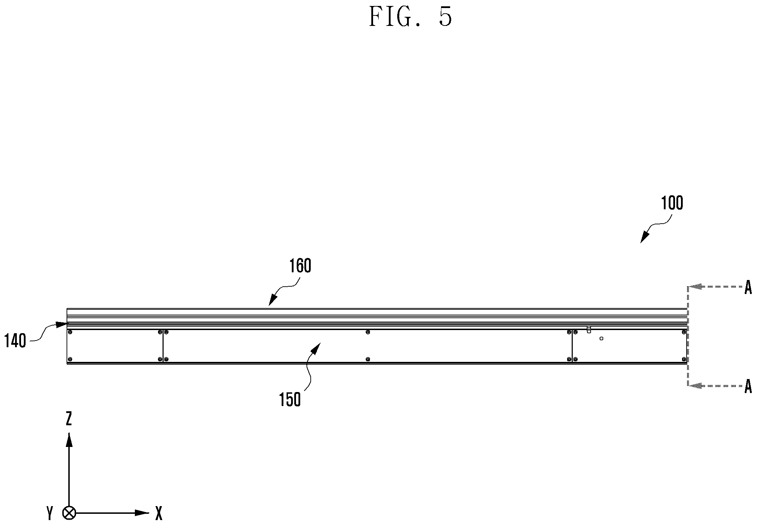

FIG. 5 is a front view showing a conveying device 100 according to an embodiment of the disclosure, and FIG. 6 is a side view showing a conveying device 100 according to an embodiment of the disclosure. In addition, FIG. 6 is a view of the conveying device 100 viewed from the direction A of FIG. 5.

With reference to FIGS. 5 and 6, the upper cover 160 may be disposed on the upper portion of the conveying device 100. For example, the upper cover 160 may be disposed in the positive z-axis direction with respect to the support unit 140.

With reference to FIG. 6, the upper cover 160 may be extended while being bent on one side and the other side. The upper cover 160 may be extended in the width direction (e.g., in the y-axis direction) of the conveying device 100, then bent on one side and the other side of the upper cover 160, and then extended in the height direction (e.g., in the z-axis direction) of the conveying device 100.

In an embodiment, the guide area 141 may include a first guide area 141-1 and/or a second guide area 141-2. The first guide area 141-1 and the second guide area 141-2 may be formed symmetrically with respect to the width direction center line C of the conveying device 100.

In an embodiment, FIG. 6 shows a state before the conveyor belt 122 (see FIG. 4) is disposed in the conveying device 100. For example, the conveyor belt 122 (see FIG. 4) may be placed in the belt groove 1212 shown in FIG. 6.

With reference to FIG. 6, the first and second guide areas 141-1 and 141-2 of the support unit 140 and the upper cover 160 may be combined at least in part. In an embodiment, the guide areas 141-1 and 141-2 may have first engaging hooks 1415-1 and 1415-2 at their ends. The upper cover 160 may have second engaging hooks 161 at their ends. The first engaging hooks 1415-1 and 1415-2 and the second engaging hooks 161 may be formed in an engageable and intermeshing shape. The guide area 141 and the upper cover 160 can be combined with each other using the first engaging hooks 1415-1 and 1415-2 and the second engaging hooks 161.

With reference to FIG. 6, the guide area 141 and the upper cover 160 may form a transfer space 165 in which the transfer target is placed. The transfer space 165 may be a space surrounded by the guide area 141 and the upper cover 160.

In an embodiment, the support unit 140 may include the installation area 142 in which the substrate 130 is disposed.

In an embodiment, the installation area 142 may have the placement groove 1421 at least in part. The substrate 130 may be fitted into the placement groove 1421 and its position can be fixed in the support unit 140.

In an embodiment, the connecting member 121 may be disposed in a space formed by the support unit 140 and the lateral cover 150. For example, in FIG. 6, the support unit 140 and the lateral cover 150 may form the seating space 1401, and the connecting member 121 may be disposed in the seating space 1401.

With reference to FIG. 6, the lateral cover 150 may be combined with the first guide area 141-1 and the lower support area 143. For example, the lateral cover 150 may be combined with the first guide area 141-1 at its upper portion and combined with the lower support area 143 at its lower portion. The upper portion of the lateral cover 150 may refer to an end of the lateral cover 150 in the positive z-axis direction, and the lower portion of the lateral cover 150 may refer to an end of the lateral cover 150 in the negative z-axis direction.

In an embodiment, the lower support area 143 may have a support surface 1431. The support surface 1431 may be a surface parallel to the width direction (e.g., the y-axis direction) and the length direction (e.g., the x-axis direction) of the conveying device 100. The support surface 1431 of the lower support area 143 may allow the conveying device 100 to maintain a fixed position without shaking.

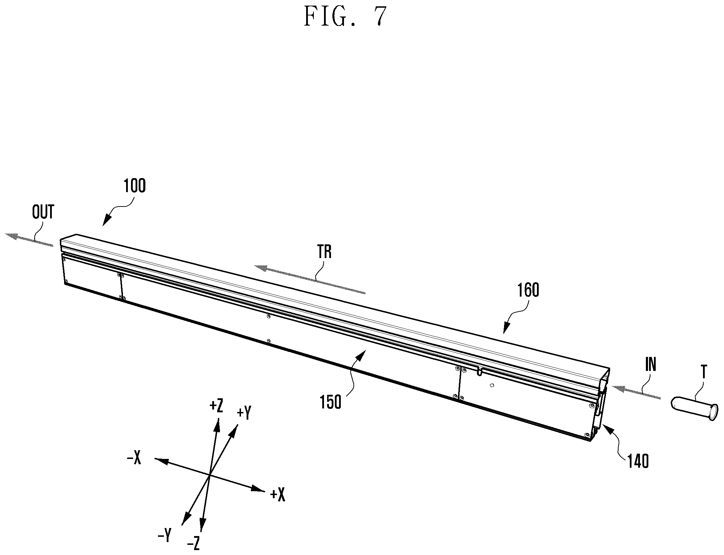

FIG. 7 is a perspective view showing the conveyance of a transfer target T in a conveying device 100 according to an embodiment of the disclosure.

With reference to FIG. 7, the transfer target T can be inserted into the conveying device 100 in the input direction IN. The transfer target inserted in the input direction IN can be moved along the transport direction TR. In an embodiment, the transport direction TR may be formed along the length direction (e.g., the x-axis direction) of the conveying device 100.

With reference to FIG. 7, the transfer target T can be discharged to the outside of the conveying device 100 along the discharge direction OUT. The transfer target T moved along the transport direction TR in the conveying device 100 can be discharged to the outside of the conveying device 100 along the discharge direction OUT.

In an embodiment, the transfer target T moved in the conveying device 100 may be a test tube containing a sample.

In an embodiment, the conveying device 100 may be connected to an external transport device (not shown). For example, at one end and/or the other end, the conveying device 100 may be connected to an external transport device (not shown). In an embodiment, the external transport device (not shown) may be a device that transports the transfer target T in a direction substantially perpendicular to the transport direction (TR) of the conveying device 100.

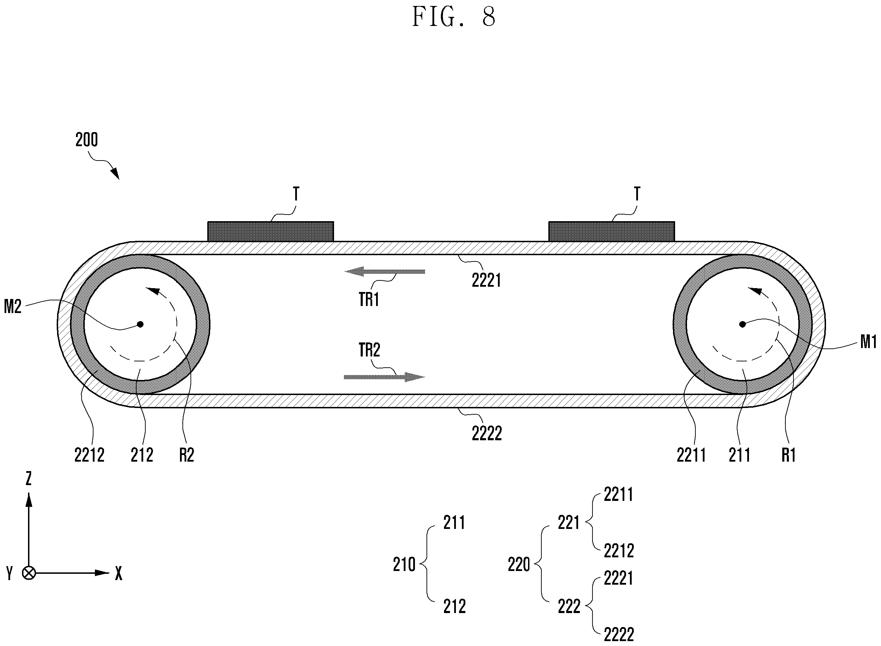

FIG. 8 is a schematic view showing the movement of a transfer target T in a conveying device 200 according to an embodiment of the disclosure.

The conveying device 200 shown in FIG. 8 may refer to the conveying device 100 shown in FIG. 2 or may include at least a part of the conveying device 100 shown in FIG. 2.

The conveying device 200 according to an embodiment of the disclosure may include a motor 210 and/or a conveyor unit 220. The conveyor unit 220 may include a connecting member 221 and/or a conveyor belt 222.

In an embodiment, the motor 210 and the conveyor unit 220 of the conveying device 200 of FIG. 8 may be substantially the same as the motor 110 and the conveyor unit 120 of the conveying device 100 of FIG. 2, respectively.

In describing the conveying device 200 according to an embodiment of the disclosure, the length direction of the conveying device 200 may refer to the x-axis direction, and the height direction of the conveying device 200 may refer to the z-axis direction.

In an embodiment, one end of the conveying device 200 may refer to an end of the conveying device 200 located in the positive x-axis direction. The other end of the conveying device 200 may refer to an end of the conveying device 200 located in the negative x-axis direction.

In an embodiment, the motor 210 may include a first motor 211 and/or a second motor 212. The first motor 211 may be a motor 210 located at one end of the conveying device 200, and the second motor 212 may be a motor 210 located at the other end of the conveying device 200. In an embodiment, the first motor 211 and the second motor 212 may be substantially the same motor.

In an embodiment, the first motor 211 and the second motor 212 may be motors of an outer rotor type. For example, each of the first and second motors 211 and 212 may be an outer rotor type motor in which a stator is positioned inside and a rotor is positioned outside the stator and rotates.

In an embodiment, the two motors 211 and 212 included in the conveying device 200 can enhance the driving force of the conveying device 200.

In an embodiment, the connecting member 221 may include a first connecting member 2211 and/or a second connecting member 2212. The first connecting member 2211 may be a connecting member 221 positioned at one end of the conveying device 200, and the second connecting member 2212 may be a connecting member 221 positioned at the other end of the conveying device 200. In an embodiment, the first connecting member 2211 and the second connecting member 2212 may be substantially the same.

In an embodiment, the motor 210 of the conveying device 200 may rotate and transmit rotational force to the conveyor unit 220.

In an embodiment, the motor 210 may be in contact with the connecting member 221 of the conveyor unit 220. For example, the first motor 211 may be disposed in the first connecting member 2211 and in contact with the first connecting member 2211, and the second motor 212 may be disposed in the second connecting member 2212 and in contact with the second connecting member 2212.

In an embodiment, the connecting member 221 in contact with the motor 210 may be rotated together with the rotation of the motor 210. When the first motor 211 rotates in a first rotation direction R1 based on a first rotation center M1, the first connecting member 2211 may also rotate in the first rotation direction R1. When the second motor 212 rotates in a second rotation direction R2 based on a second rotation center M2, the second connecting member 2212 may also rotate in the second rotation direction R2.

In an embodiment, the first motor 211 and the second motor 212 may rotate in substantially the same direction. For example, the first rotation direction R1 and the second rotation direction R2 may be substantially the same direction.

In an embodiment, the conveyor belt 222 may have a first region 2221 and/or a second region 2222. Each of the first and second regions 2221 and 2222 may refer to a region extending in the length direction of the conveying device 200 in the conveyor belt 222. The first region 2221 may be a region where the transfer target T is placed. The second region 2222 may be a region located in the negative z-axis direction based on the first region 2221.

In an embodiment, the connecting member 220 may be rotated and thus the conveyor belt 222 may be moved. In FIG. 8, as the connecting member 220 is rotated, the conveyor belt 222 in contact with the connecting member 220 may also be moved along the rotational direction of the connecting member 220. For example, a point of the first region 2221 of the conveyor belt 222 may be moved along a first transport direction TR1, and a point of the second region 2222 of the conveyor belt 222 may be moved along a second transport direction TR2.

In an embodiment, the transfer target T may be placed in the first region 2221 of the conveyor belt 222. The transfer target T may be moved along the direction in which a point of the first region 2221 moves. For example, due to the rotation of the motor 210, a point of the first region 2221 can move in the first transport direction TR1, and the transfer target T can also move in the first transport direction TR1.

In an embodiment, in the conveying device 200, the motor 210 can be connected to the conveyor belt 222 without a separate gear device. Therefore, when the conveying device 200 according to an embodiment is manufactured, the cost and time for manufacturing a separate gear device can be eliminated.

In an embodiment, because there is no need for space to dispose a separate gear device, the conveying device 200 can be reduced in size (e.g., length in the y-axis direction and z-axis direction of the conveying device 200).

According to an embodiment of the disclosure, a conveying device 100 may include a motor 110 of an outer rotor type, a conveyor unit 120 that receives rotational force from the motor 110 and moves a transfer target T inserted into the conveying device 100 in a length direction of the conveying device 100, a support unit 140 that extends in the length direction of the conveying device 100 and in which the motor 110 and the conveyor unit 120 are mounted.

In an embodiment, the conveyor unit 120 may include a connecting member 121 that surrounds the motor 110 and is in contact with the motor 110 to receive the rotational force, and a conveyor belt 122 that is disposed to wrap the connecting member 121 and moves the transfer target T.

In an embodiment, the connecting member 121 may have a belt groove 1212 formed on a surface thereof.

In an embodiment, the conveyor belt 122 may be disposed in the belt groove 1212 of the connecting member 121.

In an embodiment, the motor 110 may have an outer surface being in direct contact with an inner surface of the connecting member 121.

In an embodiment, the conveyor unit 120 may include two conveyor belts 122, and the two conveyor belts 122 may be formed in a same shape and are spaced apart from each other in a width direction of the conveying device 100.

In an embodiment, the support unit 140 may include a first guide area 141-1 located on one side of the conveyor unit 120, and a second guide area 141-2 located on other side of the conveyor unit 120. A gap between the first guide area 141-1 and the second guide area 141-2 may be formed to increase as getting farther away from the conveyor belt 122 in a height direction of the conveying device 100.

In an embodiment, the conveying device 100 may include an upper cover 160 disposed in one direction of the support unit 140 and preventing the transfer target T from being separated outside the conveying device 100.

In an embodiment, the support unit 140 may have a mounting space 1401 in which the motor 110 and the conveyor unit 120 are mounted.

In an embodiment, the conveying device 100 may include a lateral cover 150 that covers the seating space 1401 of the support unit 140.

In an embodiment, the transfer target T may be a test tube that contains a sample.

In an embodiment, the conveying device 100 may be a test tube conveying device that conveys the test tube.

In an embodiment, the motor 210 may include a first motor 211 disposed at one end of the conveying device 200, and a second motor 212 disposed at other end of the conveying device 200.

In an embodiment, the connecting member 221 may include a first connecting member 2211 disposed at the one end of the conveying device 200, in which the first motor 211 is disposed, and a second connecting member 2212 disposed at the other end of the conveying device 200, in which the second motor 212 is disposed.

In an embodiment, the conveying device 200 may include a processor 131.

In an embodiment, the processor 131 can control rotations of the first motor 211 and the second motor 212 to be identical.

While the disclosure has been particularly shown and described with reference to an exemplary embodiment thereof, it will be understood by those skilled in the art that various changes in form and details may be made therein without departing from the scope of the disclosure as defined by the appended claims.

## Claims

1. A conveying device comprising:
a motor of an outer rotor type;
a conveyor unit that receives rotational force from the motor and moves a transfer target inserted into the conveying device in a length direction of the conveying device; and
a support unit that extends in the length direction of the conveying device and in which the motor and the conveyor unit are mounted,
the conveyor unit including:
a connecting member that surrounds the motor and is in contact with the motor to receive the rotational force; and
a conveyor belt that is disposed to wrap the connecting member and moves the transfer target.

2. The conveying device of claim 1, wherein the connecting member has a belt groove formed on a surface thereof, and
the conveyor belt is disposed in the belt groove of the connecting member.

3. The conveying device of claim 1, wherein the motor has an outer surface being in direct contact with an inner surface of the connecting member.

4. The conveying device of claim 1, wherein the conveyor unit includes two conveyor belts, and
the two conveyor belts are formed in a same shape and are spaced apart from each other in a width direction of the conveying device.

5. The conveying device of claim 1, wherein the support unit includes:
a first guide area located on one side of the conveyor unit; and
a second guide area located on other side of the conveyor unit, and
wherein a gap between the first guide area and the second guide area is formed to increase as getting farther away from the conveyor belt in a height direction of the conveying device.

6. The conveying device of claim 1, further comprising:
an upper cover disposed in one direction of the support unit and preventing the transfer target from being separated outside the conveying device.

7. The conveying device of claim 1, wherein the support unit has a mounting space in which the motor and the conveyor unit are mounted, and
the conveying device further comprises a lateral cover that covers the seating space of the support unit.

8. The conveying device of claim 1, wherein the transfer target is a test tube that contains a sample, and
the conveying device is a test tube conveying device that conveys the test tube.

9. The conveying device of claim 1, wherein the motor includes:
a first motor disposed at one end of the conveying device; and
a second motor disposed at other end of the conveying device, and
wherein the connecting member includes:
a first connecting member disposed at the one end of the conveying device, in which the first motor is disposed; and
a second connecting member disposed at the other end of the conveying device, in which the second motor is disposed.

10. The conveying device of claim 9, further comprising:
a processor that controls rotations of the first motor and the second motor to be identical.
